# FASCICULE DE BREVET EUROPEEN

(11) **EP 2 071 677 B1**
(45) Date de publication et mention de la délivrance du brevet: **18.04.2012**
(21) Numéro de dépôt: 08171433.9
(22) Date de dépôt: 12.12.2008
(51) Int. Cl.: H01R 13/622

(54) **Connecteur à système anti-déverrouillage**
Anschluss an Anti-Entriegelungssysteme
Connector with anti-unlocking system

(30) Priorité: 14.12.2007 FR 0759846
(43) Date de publication de la demande: 17.06.2009
(73) Titulaire: RADIALL, 93116 Rosny-Sous-Bois (FR)
(72) Inventeur: Berthet, Vincent, 38134 Saint Joseph de Riviere (FR)
(74) Mandataire: Myon, Gérard Jean-Pierre

(56) Documents cités:
- FR-A- 2 379 918
- FR-A- 2 893 192
- US-A- 4 531 802
- US-A- 5 192 219

## Description

La présente invention concerne le domaine technique des connecteurs utilisés pour assurer le raccordement de manière facilement démontable des conducteurs d'un câble électrique et/ou optique à un système ou un autre câble électrique et/ou optique.

L'invention concerne plus particulièrement le domaine des connecteurs dont le raccordement avec un connecteur complémentaire s'effectue selon une direction d'enfichage, les connecteurs étant ainsi accouplés ou désaccouplés selon un mouvement de translation parallèle à la direction d'enfichage. Afin de garantir une certaine fiabilité aux connections réalisées et d'éviter toute rupture de connexion, de tels connecteurs sont équipés d'un manchon de verrouillage qui est destiné à coopérer avec des moyens de verrouillage offerts par le connecteur complémentaire. Ainsi, le manchon de verrouillage peut mettre en oeuvre un système de verrouillage à baïonnette ou encore comprendre un filetage destiné à coopérer avec un filetage complémentaire du connecteur complémentaire. Un tel manchon de verrouillage se trouve donc mobile en rotation entre une position de déverrouillage dans laquelle les connecteurs peuvent être assemblés ou séparés et une position de verrouillage dans laquelle, lorsque les connecteurs ont été préalablement enfichés, il n'est plus possible de les séparer.

Un tel manchon de verrouillage donne pleinement satisfaction en ce qui concerne sa fonction d'obstacle à la séparation intempestive des connecteurs raccordés entre eux. Toutefois, dans certaines conditions d'utilisation notamment lorsque les connecteurs raccordés entre eux sont soumis à des contraintes diverses de traction en rotation ou, encore, à des vibrations, il est apparu que le manchon de verrouillage est susceptible de passer de manière intempestive de sa position de verrouillage à sa position de déverrouillage, de sorte qu'il n'est plus à même d'assurer sa fonction de sécurisation du raccordement.

Il est donc apparu le besoin d'un nouveau type de connecteur qui soit en mesure de garantir la fiabilité du raccordement en réduisant les risques de déverrouillage intempestif du manchon de verrouillage.

FR-A-2 379 918 décrit un tel connecteur comprenant un manchon de verrouillage et une bague de freinage. Néanmoins, un tel connecteur présente des risques de desserrage de la bague de freinage ou de déverrouillage du manchon de verrouillage.

Afin d'atteindre cet objectif, l'invention concerne un connecteur comprenant :
- un corps destiné à être enfiché dans ou sur le corps d'un connecteur complémentaire selon une direction d'enfichage X-X',
- des moyens de raccordement destinés à coopérer avec des moyens de raccordement complémentaires du connecteur complémentaire de manière à raccorder des conducteurs électriques ou optiques,
- un manchon de verrouillage qui entoure le corps du connecteur et qui est adapté pour coopérer avec le corps du connecteur et avec des moyens de verrouillage offerts par le connecteur complémentaire de manière à bloquer des mouvements relatif du connecteur et du connecteur complémentaire dans la direction d'enfichage, le manchon de verrouillage étant mobile en rotation d'axe X-X', par rapport au corps du connecteur, entre une position de déverrouillage dans laquelle les connecteurs peuvent être séparés et une position de verrouillage dans laquelle les connecteurs ne peuvent être séparés.
- une bague de freinage qui coopère avec le corps du connecteur en étant mobile au moins en rotation d'axe X-X' entre une position de freinage dans laquelle la bague s'oppose à la rotation du manchon de verrouillage et, une position dégagée dans laquelle la bague ne s'oppose pas à la rotation du manchon de verrouillage.

Selon l'invention, le sens de la rotation de la bague de freinage pour passer de la position de freinage à la position dégagée est opposé au sens de la rotation du manchon de verrouillage pour passer de la position de verrouillage à la position de déverrouillage.

Une telle opposition entre les sens de rotation de la bague de freinage et du manchon de verrouillage permet de garantir l'efficacité de la bague de freinage. En effet, lorsque la bague de freinage et le manchon de verrouillage coopèrent l'un avec l'autre, ou plus simplement sont en contact l'un avec l'autre, un mouvement de déverrouillage du manchon de verrouillage, tend à déplacer la bague vers sa position de freinage tandis qu'un mouvement de dégagement de la bague tend à accentuer le verrouillage du manchon. Ainsi, le dégagement de la bague puis le déverrouillage du manchon ne peuvent être réalisés que de manière intentionnelle par un utilisateur.

Ainsi, la mise en oeuvre d'une telle bague de freinage permet de faire obstacle au déverrouillage intempestif du manchon de verrouillage. Selon l'invention, le freinage assuré par la bague de freinage peut être réalisé de toute manière appropriée, la bague de freinage coopérant ou étant en contact avec le manchon de verrouillage dans la position de freinage.

De plus, selon l'invention, une telle bague de freinage peut être associée à des manchons de verrouillage mettant en oeuvre différents types de verrouillage, tels que par exemple un verrouillage à baïonnette ou encore un verrouillage vissé mettant alors en oeuvre des moyens de liaison hélicoïdale destinés à coopérer avec les moyens de verrouillage du connecteur complémentaire.

Selon une caractéristique de l'invention, les moyens de liaison hélicoïdale comprennent au moins un filetage aménagé à l'intérieur ou à l'extérieur du manchon de verrouillage et destiné à coopérer avec un filetage complémentaire offert pas le connecteur complémentaire.

Selon l'invention, la liaison entre le corps du connecteur et la bague de freinage peut être réalisée de toute manière appropriée, dans la mesure où le passage de la bague entre sa position dégagée et sa position de freinage, implique nécessairement une rotation de la bague autour de la direction d'enfichage X-X'. Ainsi, selon l'invention, la bague de freinage et le corps du connecteur peuvent être liés par une liaison de type baïonnette, le passage de la position dégagée à la position de freinage faisant intervenir tout d'abord, une translation suivie d'une rotation autour de la direction d'enfichage X-X'.

Selon une forme préférée de réalisation de l'invention, la bague et le corps du connecteur sont liés par une liaison hélicoïdale. Une telle liaison hélicoïdale peut être réalisée de toute manière appropriée, comme par exemple au moyen de pions aménagés, soit sur le corps du connecteur, soit sur la bague de freinage et se déplaçant dans une glissière hélicoïdale aménagée sur l'autre de ces deux composants. Dans une variante de réalisation préférée, la liaison hélicoïdale mettra en oeuvre au moins un filet aménagé à l'intérieur de la bague de freinage coopérant avec un filet complémentaire aménagé sur l'extérieur du corps du connecteur. Bien entendu, il pourra être envisagé de mettre en oeuvre plusieurs filets en fonction du pas utilisé pour assurer un passage de la bague de freinage entre sa position dégagée et sa position de freinage par un mouvement de rotation réduit, inférieur par exemple à un tour.

Dans le cas de la mise en oeuvre de liaisons hélicoïdales entre le corps du connecteur et, d'une part, le manchon de verrouillage et, d'autre part, la bague de freinage, ces liaisons hélicoïdales seront de sens inverse. Plus particulièrement, le filetage du manchon et la liaison hélicoïdale entre la bague et le corps du connecteur seront inversés.

Selon l'invention, la coopération entre la bague de freinage et le manchon de verrouillage en position de freinage de la bague peut être réalisée de toute manière appropriée et selon une forme préférée de réalisation, en position de freinage, la bague de freinage est en appui sur le manchon de verrouillage.

Selon une caractéristique de l'invention visant à faire obstacle à toute rotation relative d'axe X-X' du corps du connecteur par rapport au corps du connecteur complémentaire après enfichage, le connecteur comprend un ou des moyens de blocage destinés à coopérer avec des moyens complémentaires de blocage offerts par le connecteur complémentaire.

Selon l'invention, les moyens de blocage peuvent être réalisés de toute façon appropriée et, par exemple, résulter des formes adoptées pour le corps du connecteur et le connecteur complémentaire. Ainsi, les parties coopérant entre elles du corps du connecteur et du connecteur complémentaire peuvent présenter des sections droites transversales allongées, telles que par exemple ovales ou oblongues ou encore des sections droites transversales polygonales, telles que, par exemple, rectangulaires.

Selon une caractéristique de l'invention, les moyens de blocage comprennent au moins une rainure ou clavette aménagée sur le corps du connecteur.

Selon l'invention, les moyens de raccordement sont adaptés pour assurer le raccordement de différents types de conducteurs de câbles électriques et/ou optiques. Ainsi, les moyens de raccordement selon l'invention peuvent être conçus pour assurer le raccordement d'une unique fibre optique ou encore des conducteurs d'un câble coaxial ou des conducteurs électriques d'un câble multipôles ou multiconducteurs. Les moyens de raccordement peuvent également être adaptés pour assurer le raccordement des conducteurs d'un câble mixte comprenant des fibres optiques et des conducteurs électriques.

Selon une caractéristique de l'invention, les moyens de raccordement sont adaptés pour assurer le raccordement des conducteurs d'un câble coaxial.

Bien entendu, les différentes caractéristiques, formes et variantes de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description ci-dessous effectuée en référence aux dessins annexés qui illustrent des formes non limitatives de réalisation d'un connecteur selon l'invention.
- La figure 1 est une perspective partiellement arrachée montrant un connecteur, selon l'invention, conçu pour assurer le raccordement des conducteurs d'un câble coaxial et placé en regard d'un connecteur complémentaire avec lequel il est destiné à coopérer.
- La figure 2 est une coupe longitudinale des connecteurs illustrés à la figure 1.
- La figure 3 est une coupe axiale du connecteur et du connecteur complémentaire illustrés à la figure 1, accouplés, le manchon de verrouillage du connecteur selon l'invention étant en position de verrouillage tandis que la bague de freinage du connecteur selon l'invention est dans une position dégagée.
- La figure 4 montre le connecteur selon l'invention et son connecteur complémentaire accouplés, le manchon de verrouillage étant en position de verrouillage, tandis que la bague de freinage est en position de freinage, de manière à faire obstacle à la rotation du manchon de verrouillage.
- La figure 5 est une perspective arrachée montrant un connecteur selon l'invention et son connecteur complémentaire conçu pour assurer les raccordements vers un câble quadripolaire, seul deux pôles des moyens de raccordement des connecteurs étant visibles à la figure.

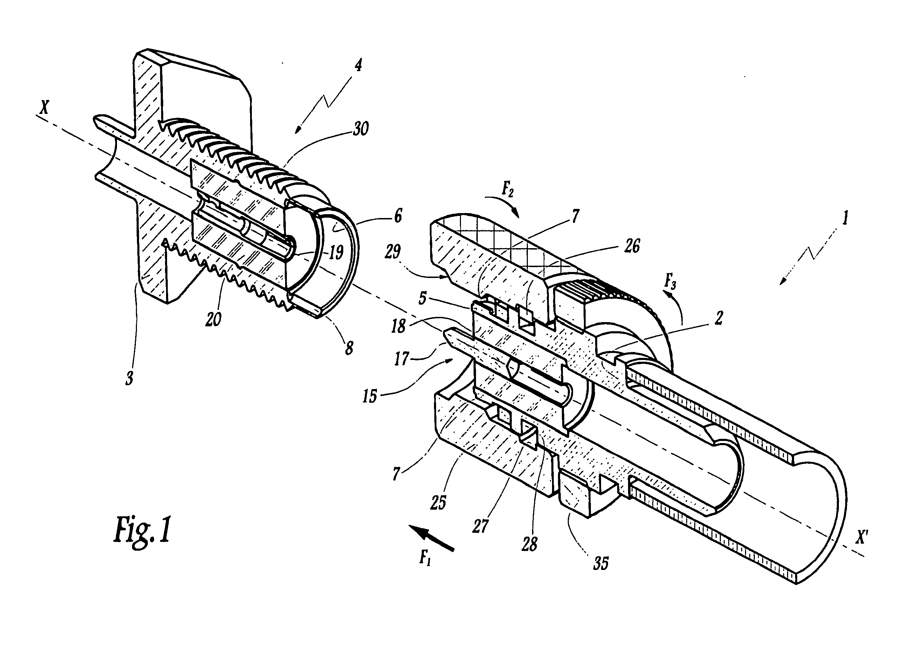

Un connecteur selon l'invention, tel qu'illustré à la figure 1 est désigné dans son ensemble par la référence 1, comprend un corps 2 destiné à être enfiché, selon une direction d'enfichage X-X', dans le corps 3 d'un connecteur complémentaire désigné dans son ensemble par la référence 4. Selon l'exemple illustré, l'extrémité fonctionnelle 5 du corps 2 possède une conformation mâle de forme générale cylindrique de révolution destinée à venir s'engager en translation dans un logement de forme complémentaire 6 offert par le corps 3 du connecteur complémentaire 4. Compte tenu des formes cylindriques de révolution du logement 6 et de l'extrémité 5, le connecteur 1 comprend en tant que moyen de blocage de la rotation du corps 2 par rapport au corps 3, deux clavettes 7 aménagées sur la surface extérieure de l'extrémité active 5 et destinées à venir s'engager dans des rainures complémentaires 8 aménagées à l'intérieur du logement 6 du connecteur complémentaire 4.

Afin d'assurer sa fonction de raccordement électrique et/ou optique de conducteurs, le connecteur 1 comprend en outre des moyens de raccordement 15 destinés à coopérer avec des moyens de raccordement complémentaires 16 offerts par le connecteur complémentaire 4. Selon l'exemple illustré, le connecteur 1 est conçu pour assurer le raccordement des conducteurs électriques d'un câble coaxial non représenté. Ainsi, les moyens de raccordement 15 comprennent un contact central 17 destiné à être raccordé au conducteur central du câble coaxial, tandis que le corps 2 du connecteur 1 est réalisé en matériau conducteur, de manière à assurer la continuité du conducteur de blindage auquel il est raccordé électriquement. Le contact 17 est alors maintenu à l'intérieur du corps 2 par un fourreau isolant 18.

De la même manière, les moyens de raccordement complémentaires 16 comprennent un contact central 19 réalisé sous la forme d'un fourreau conducteur 19 destiné à recevoir le contact 17 et à être raccordés à un conducteur homologue du conducteur central du câble coaxial. Tout comme le corps 2, le corps 3 du connecteur complémentaire 4 est également réalisé en matériau conducteur, de manière à assurer le raccordement électrique du blindage, auquel est associé le connecteur complémentaire 4, avec le corps 2 et le blindage du conducteur coaxial qui lui est associé. Selon l'exemple illustré, le contact central 19 est maintenu à l'intérieur du corps 3 par un fourreau isolant 20.

Afin d'assurer la fiabilité du raccordement réalisé par le connecteur selon l'invention 1 et son connecteur complémentaire 4, le connecteur 1 selon l'invention comprend un manchon de verrouillage 25 qui entoure le corps 2. Le manchon de verrouillage 25 est, selon l'exemple illustré, relié au corps 2 par une liaison pivot réalisée par une bague élastique 26 engagée simultanément dans une rainure 27 du manchon 25 et une rainure homologue 28 du corps 2. Ainsi, le manchon 25 est lié en translation selon la direction d'enfichage X-X' et libre en rotation autour de cette même direction d'enfichage X-X'. Le manchon de verrouillage 25 comprend en outre en tant que moyen de verrouillage, un filetage intérieur 29 destiné à coopérer avec un filetage extérieur 30 offert par le corps 3 du connecteur complémentaire 4.

Le connecteur 1, selon l'invention, et son connecteur complémentaire 4 sont mis en oeuvre de la manière suivante, lorsqu'ils doivent être raccordés l'un à l'autre.

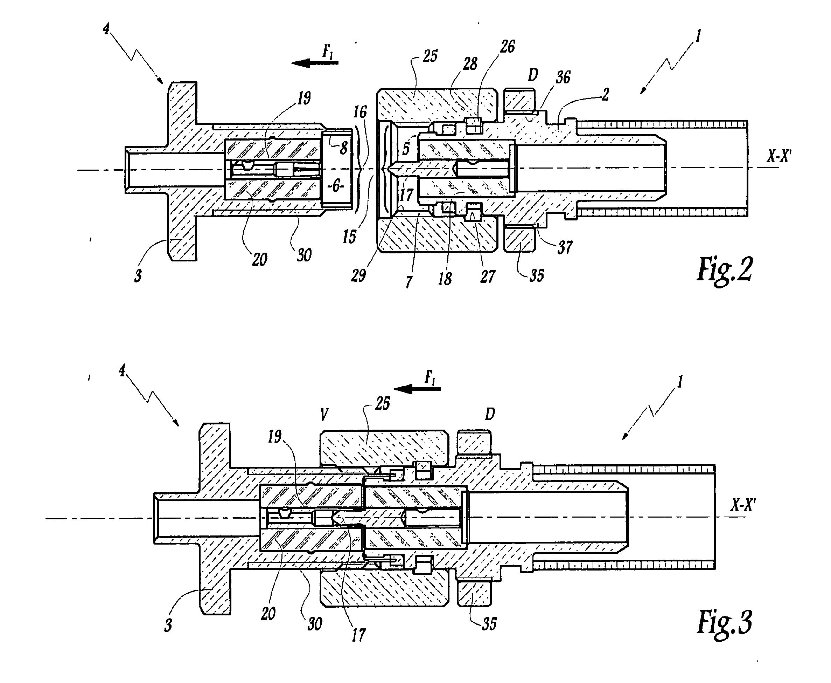

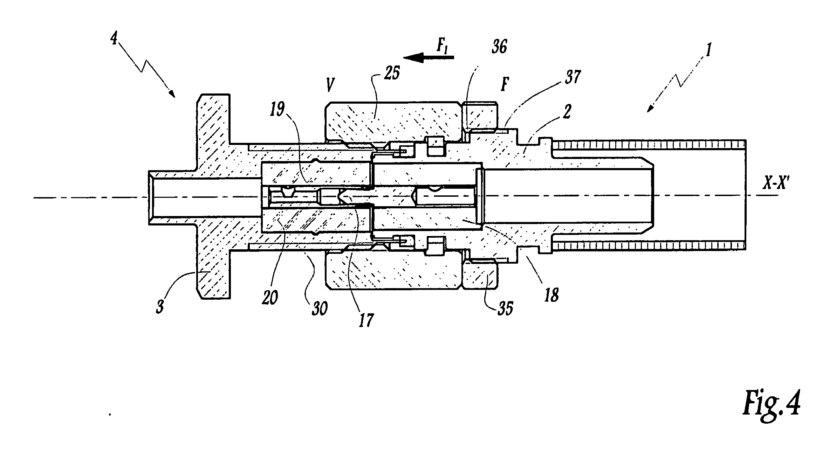

Tout d'abord, l'extrémité active 5 du corps 2 est enfichée dans le logement complémentaire 6 du corps 3 par un mouvement de translation dans le sens de la flèche F₁ selon la direction d'enfichage X-X'. Lors de cet enfichage, les clavettes 7 sont placées pour coïncider avec les rainures 8, l'extrémité de chaque clavette 7 étant engagée dans l'extrémité correspondante de chaque rainure 8, empêchant ainsi toute rotation relative des corps 2 et 3. Ensuite, le manchon de verrouillage 25 est tourné dans le sens de la flèche F₂, de manière à engager le filetage 29 sur le filetage 30 du corps 3. Cette rotation dans le sens de la flèche F₂ induit une translation complémentaire dans le sens de la flèche F₁ jusqu'à amener le manchon de verrouillage en position de verrouillage V, telle qu'illustrée à la figure 3. A ce stade, les moyens de raccordement électriques 15 et 16 coopèrent parfaitement assurant la continuité électrique des conducteurs qui leur sont associés. Toutefois, le manchon de verrouillage 25 est toujours susceptible de se dévisser sous l'effet de vibrations ou de chocs qu'il serait susceptibles de subir. Afin de prévenir de tels risques de dévissage, l'invention prévoit de mettre en oeuvre une bague de freinage 35 qui coopère avec le corps 2 du connecteur de manière à être mobile en rotation au moins selon la direction d'enfichage X-X' entre une position dégagée D, telle qu'illustrée aux figures 2 et 3, et une position de freinage F plus particulièrement illustrée à la figure 4. Dans la position de freinage F, la bague de freinage 35 est en appui contre le manchon de verrouillage 25, de manière à s'opposer à la rotation de ce dernier. Selon l'exemple illustré, la bague de freinage 35 est liée au corps 2 par l'intermédiaire d'une liaison hélicoïdale résultant de la coopération d'un filetage 36 aménagé à l'intérieur de la bague 35 et coopérant avec un filetage externe 37 offert par le corps 2. Les filetages 36 et 37 possèdent un sens opposé à celui des filetages 29 et 30. Ainsi, lorsque le manchon 25 est en position de verrouillage V, la bague de freinage 35 est amenée depuis sa position dégagée D illustrée à la figure 3, à sa position de freinage F illustrée à la figure 4, par une rotation dans le sens de la flèche F₃ (figure 1) opposé au sens de vissage du manchon 25, flèche F₂. Lorsque le manchon de verrouillage 25 et la bague de freinage 35 sont en contact l'un avec l'autre comme illustré à la figure 4, une rotation du manchon de verrouillage 25 dans un sens de dévissage correspondant au sens de la flèche F₃ contribue à visser la bague de freinage 35 et donc à la rapprocher du manchon 25, ce qui va dans le sens d'une augmentation de l'effort de freinage assuré par la bague 35. De la même manière, une rotation de la bague de freinage 35 dans le sens de la flèche F₂ contribue à accentuer le serrage du manchon de verrouillage 25. Par ailleurs, il sera noté que les clavettes 7 et les rainures 8 annulent tout risque de déverrouillage en faisant obstacle à une rotation de l'ensemble du connecteur 1 par rapport au connecteur complémentaire 4.

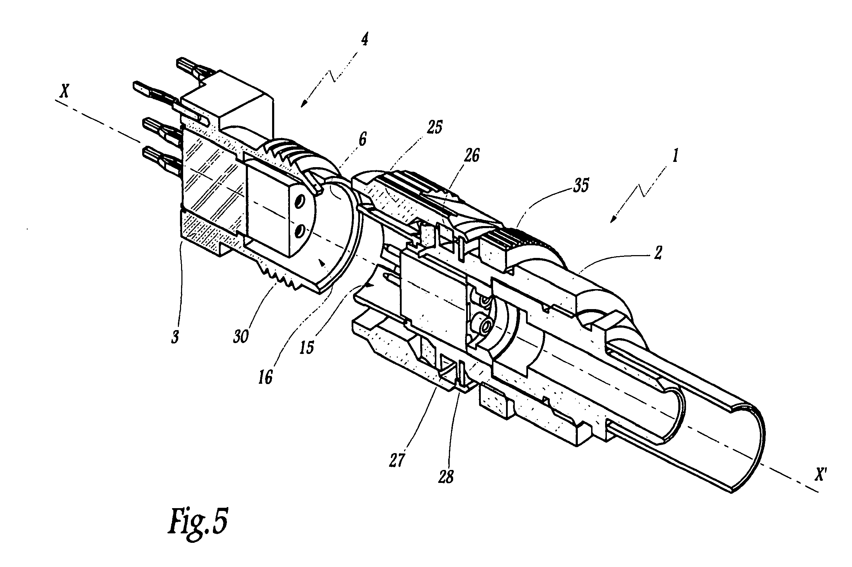

Selon l'exemple illustré, les moyens de raccordement 15 et 16 sont conçus pour assurer le raccordement des deux conducteurs d'un câble coaxial. Toutefois, l'invention peut également être envisagée pour des connecteurs multipolaires et par exemple conçus pour assurer le raccordement électrique d'un câble quadripolaire comprenant quatre conducteurs, comme cela est illustré à la figure 5.

Par ailleurs, selon les exemples illustrés, la bague de freinage 35 est liée au corps 2 par une liaison hélicoïdale de sens inverse à celle réalisée par le manchon de verrouillage 25 sur le corps 3 du connecteur complémentaire 4. Toutefois, selon l'invention, la liaison hélicoïdale de la bague de freinage 35 sur le corps 2 pourrait être de même sens que celle de la liaison entre le manchon de verrouillage 25 et le corps 3 avec un pas de même valeur ou, au contraire, un pas de valeur différente. Les différentiels des valeurs de pas contribuent alors à augmenter les frictions entre la bague 35 et le manchon 25. En effet, dans une forme particulièrement préférée de réalisation, le freinage assuré par la bague 35 résulte d'une friction entre ladite bague 35 et le manchon de verrouillage 25.

Par ailleurs, selon les exemples illustrés, le manchon de verrouillage 25 est relié par une liaison pivot au corps 2. Toutefois, selon l'invention, le manchon de verrouillage 25 pourrait également connaître un degré de liberté en translation axiale par rapport au corps 2 dans la mesure où, en position de verrouillage, il fait obstacle à tout désengagement du connecteur 1 par rapport à son connecteur complémentaire 4.

De même, selon les exemples illustrés, l'invention est appliquée à des connecteurs droits, mais elle pourrait également être mise en oeuvre pour des connecteurs coudés.

Bien entendu, diverses autres modifications peuvent être apportées au connecteur selon l'invention dans le cadre des revendications.

## Revendications

1. Connecteur comprenant :
- un corps (2) destiné à être enfiché dans ou sur le corps (3) d'un connecteur complémentaire (4) selon une direction d'enfichage X-X',
- des moyens de raccordement (15) destinés à coopérer avec des moyens de raccordement complémentaires (16) du connecteur complémentaire (4) de manière à raccorder des conducteurs électriques ou optiques,
- un manchon de verrouillage (25) qui entoure le corps (2) du connecteur et qui est adapté pour coopérer avec le corps (2) du connecteur et avec des moyens de verrouillage (30) offerts par le connecteur complémentaire (4) de manière à bloquer des mouvements relatif du connecteur (2) et du connecteur complémentaire (4) dans la direction d'enfichage, le manchon de verrouillage (25) étant mobile en rotation d'axe X-X', par rapport au corps (2) du connecteur, entre une position de déverrouillage dans laquelle les connecteurs (1, 4) peuvent être séparés et une position de verrouillage (V) dans laquelle les connecteurs (1, 4) ne peuvent être séparés,
- une bague de freinage (35) qui coopère avec le corps (2) du connecteur en étant mobile au moins en rotation d'axe X-X' entre une position de freinage (F) dans laquelle la bague s'oppose à la rotation du manchon de verrouillage (25) et une position dégagée (D) dans laquelle la bague (35) ne s'oppose pas à la rotation du manchon de verrouillage (25),
**caractérisé en ce que** le sens de la rotation de la bague de freinage (35) pour passer de la position de freinage (F) à la position dégagée (D) est opposé au sens de la rotation du manchon de verrouillage (25) pour passer de la position de verrouillage (V) à la position de déverrouillage.

2. Connecteur selon la revendication 1 **caractérisé en ce que** le manchon de verrouillage (25) comprend des moyens de liaison hélicoïdale (29) destinés à coopérer avec les moyens de verrouillage du connecteur complémentaire.

3. connecteur selon la revendication 2, **caractérisé en ce que** les moyens de liaison hélicoïdale comprennent un filetage (29) aménagé a l'intérieur ou à l'extérieur du manchon de verrouillage (25) et destiné à coopérer avec un filetage complémentaire (30) offert par le connecteur complémentaire (4).

4. Connecteur selon l'une des revendications 1 à 3, **caractérisé en ce que** la bague de freinage (35) et le corps (2) du connecteur sont liés par une liaison hélicoïdale.

5. Connecteur selon les revendications 3 et 4, **caractérisé en ce que** le filetage du manchon (25) et la liaison hélicoïdale entre la bague (35) et le corps (2) du connecteur sont inversés.

6. Connecteur selon l'une des revendications 1 à 5, **caractérisé en ce qu'**en position de freinage (F), la bague de freinage (35) est en appui sur le manchon de verrouillage (25).

7. Connecteur selon l'une des revendications 1 à 6 **caractérisé en ce qu'**il comprend un ou des moyens de blocage (7) destinés à coopérer avec des moyens complémentaires (8) de blocage offerts par le connecteur complémentaire (4) pour faire obstacle à une rotation d'axe X-X' entre le corps (2) du connecteur et le corps (3) du connecteur complémentaire (4) lorsqu'ils sont enfichés l'un dans l'autre.

8. Connecteur selon la revendication 7, **caractérisé en ce que** les moyens de blocage comprennent au moins une rainure ou clavette (7) aménagée sur le corps (2) du connecteur.

9. Connecteur selon l'un des revendications 1 à 8, **caractérisé en ce que** les moyens de raccordement (15) sont adaptés pour assurer le raccordement des conducteurs d'un câble coaxial.

## Claims

1. A connector comprising:
■ a body (2) for plugging in or on the body (3) of a complementary connector (4) along a plugging axis X-X';
■ connection means (15) for co-operating with complementary connection means (16) of the complementary connector (4) so as to connect together electrical or optical conductors;
■ a locking sleeve (25) that surrounds the body (2) of the connector and that is adapted to co-operate with the body (2) of the connector and with locking means (30) provided by the complementary connector (4) in such a manner as to block relative movement between the connector (2) and the complementary connector (4) in the plugging direction, the locking sleeve (25) being movable in rotation about the axis x-x' relative to the body (2) of the connector between an unlocking position in which the connectors (1, 4) can be separated and a locking position (V) in which the connectors (1, 4) cannot be separated; and
■ a brake ring (35) that co-operates with the body (2) of the connector by being movable at least in rotation about the axis X-X' between a braking position (F) in which the ring opposes any turning of the locking sleeve (25) and a disengaged position (D) in which the ring (35) does not oppose any turning of the locking sleeve (25),
**characterized in that** the direction of rotation of the brake ring (35) for going from the braking position (F) to the disengaged position (D) is opposite to the direction of rotation of the locking sleeve (25) to go from the locking position (V) to the unlocking position.

2. A connector according to claim 1, **characterized in that** the locking sleeve (25) includes helical link means (29) for co-operating with the locking means of the complementary connector.

3. A connector according to claim 2, **characterized in that** the helical link means comprise a thread (29) formed inside or outside the locking sleeve (25) and designed to co-operate with a complementary thread (30) provided by the complementary connector(4).

4. A connector according to any of claims 1 to 3, **characterized in that** the brake ring (35) and the body (2) of the connector are linked together by a helical link.

5. A connector according to claims 3 and 4, **characterized in that** the thread of the sleeve (25) and the helical link between the ring (35) and the body (2) of the connector are oppositely-handed.

6. A connector according to any of claims 1 to 5, **characterized in that** in the braking position (F), the brake ring (35) bears against the locking sleeve (25).

7. A connector according to any of claims 1 to 6, **characterized in that** it includes one or more locking means (7) for co-operating with complementary blocking means (8) provided by the complementary connector (4) to oppose rotation about the axis X-X' between the body (2) of the connector and the body (3) of the complementary connector (4) when they are plugged one in the other.

8. A connector according to claim 7, **characterized in that** the blocking means comprise at least one groove or key (7) formed in or on the body (2) of the connector.

9. A connector according to any of claims 1 to 8, **characterized in that** the connection means (15) are adapted to provide connection for the conductors of a coaxial cable.

## Patentansprüche

1. Steckverbinder, der Folgendes umfasst:
- einen Körper (2), der dazu bestimmt ist, gemäß einer Einsteckrichtung X-X' in den oder auf dem Körper (3) eines ergänzenden Steckverbinders (4) eingesteckt/aufgesteckt zu werden;
- Anschlussmittel (15), die dazu bestimmt sind, derart mit ergänzenden Anschlussmitteln (16) des ergänzenden Steckverbinders (4) zusammenzuwirken, dass elektrische oder optische Leiter aneinander angeschlossen werden,
- eine Verriegelungsmuffe (25), die den Körper (2) des Steckverbinders umgibt und die angepasst ist, um derart mit dem Körper (2) des Steckverbinders und mit durch den ergänzenden Steckverbinder (4) gebotenen Verriegelungsmitteln (30) zusammenzuwirken, dass relative Bewegungen des Steckverbinders (2) und des ergänzenden Steckverbinders (4) in der Einsteckrichtung gesperrt werden, wobei die Verriegelungsmuffe (25) in der Achse X-X' in Bezug zum Körper (2) des Steckverbinders zwischen einer Entriegelungsstellung, in der die Steckverbinder (1, 4) getrennt werden können, und einer Verriegelungsstellung (V) drehbeweglich ist, in der die Steckverbinder (1, 4) nicht getrennt werden können.
- einen Bremsring (35), der mit dem Körper (2) des Steckverbinders zusammenwirkt und mindestens in der Achse X-X' zwischen einer Bremsstellung (F), in der der Ring der Drehung der Verriegelungsmuffe (25) entgegenwirkt, und einer entkuppelten Stellung (D) drehbeweglich ist, in der der Ring (35) der Drehung der Verriegelungsmuffe (25) nicht entgegenwirkt,
**dadurch gekennzeichnet, dass** die Drehrichtung des Bremsrings (35) für den Übergang von der Bremsstellung (F) in die entkuppelte Stellung (D) der Drehrichtung der Verriegelungsmuffe (25) für den Übergang von der Verriegelungsstellung (V) zur Entriegelungsstellung entgegengesetzt ist.

2. Steckverbinder nach Anspruch 1, **dadurch gekennzeichnet, dass** die Verriegelungsmuffe (25) Schraubenverbindungsmittel (29) umfasst, die dazu bestimmt sind, mit den Verriegelungsmitteln des ergänzenden Steckverbinders zusammenzuwirken.

3. Steckverbinder nach Anspruch 2, **dadurch gekennzeichnet, dass** die Schraubenverbindungsmittel ein Gewinde (29) umfassen, das innerhalb oder außerhalb der Verriegelungsmuffe (25) eingerichtet und dazu bestimmt ist, mit einem durch den ergänzenden Steckverbinder (4) gebotenen ergänzenden Gewinde (30) zusammenzuwirken.

4. Steckverbinder nach einem der Ansprüche 1 bis 3, **dadurch gekennzeichnet, dass** der Bremsring (35) und der Körper (2) des Steckverbinders durch eine Schraubenverbindung verbunden sind.

5. Steckverbinder nach den Ansprüchen 3 und 4, **dadurch gekennzeichnet, dass** das Gewinde der Muffe (25) und die Schraubenverbindung zwischen dem Ring (35) und dem Körper (2) des Steckverbinders umgekehrt sind.

6. Steckverbinder nach einem der Ansprüche 1 bis 5, **dadurch gekennzeichnet, dass** der Bremsring (35) in der Bremsstellung (F) auf der Verriegelungsmuffe (25) aufliegt.

7. Steckverbinder nach einem der Ansprüche 1 bis 6, **dadurch gekennzeichnet, dass** er ein oder mehrere Sperrmittel (7) umfasst, die dazu bestimmt sind, mit ergänzenden, durch den ergänzenden Steckverbinder (4) gebotenen Sperrmitteln (8) zusammenzuwirken, um eine Drehung mit der Achse X-X' zwischen dem Körper (2) des Steckverbinders und dem Körper (3) des ergänzenden Körpers (4) zu verhindern, wenn sie ineinander eingesteckt sind.

8. Steckverbinder nach Anspruch 7, **dadurch gekennzeichnet, dass** die Sperrmittel mindestens eine Rille oder einen Keil (7) umfassen, die/der auf dem Körper (2) des Steckverbinders eingerichtet ist.

9. Steckverbinder nach einem der Ansprüche 1 bis 8, **dadurch gekennzeichnet, dass** die Anschlussmittel (15) angepasst sind, um den Anschluss der Leiter eines Koaxialkabels zu gewährleisten.
